# EUROPEAN PATENT APPLICATION

(11) **EP 2 216 545 A2**
(43) Date of publication of application: **11.08.2010**
(21) Application number: 10152055.9
(22) Date of filing: 29.01.2010
(51) Int. Cl.: F03D 1/06, F03D 11/00

(54) **Permeable acoustic flap for wind turbine blades**

(30) Priority: 06.02.2009 US 366828
(71) Applicant: General Electric Company, Schenectady, NY 12345 (US)
(72) Inventor: Kinzie, Kevin W., Moore, SC 29369 (US); Drobietz, Roger, 48431, Rheine (DE)
(74) Representative: Bedford, Grant Richard

(57) **Abstract**

A wind turbine blade (106) includes a permeable flap (200) extending from a trailing edge (134) of the blade (106).

## Description

The subject matter described here generally relates to fluid reaction surfaces with means moving working fluid deflecting working member part during operation, and, more particularly, to wind turbines blades having permeable acoustic flaps.

A wind turbine is a machine for converting the kinetic energy in wind into mechanical energy. If the mechanical energy is used directly by the machinery, such as to pump water or to grind wheat, then the wind turbine may be referred to as a windmill. Similarly, if the mechanical energy is converted to electricity, then the machine may also be referred to as a wind generator or wind power plant.

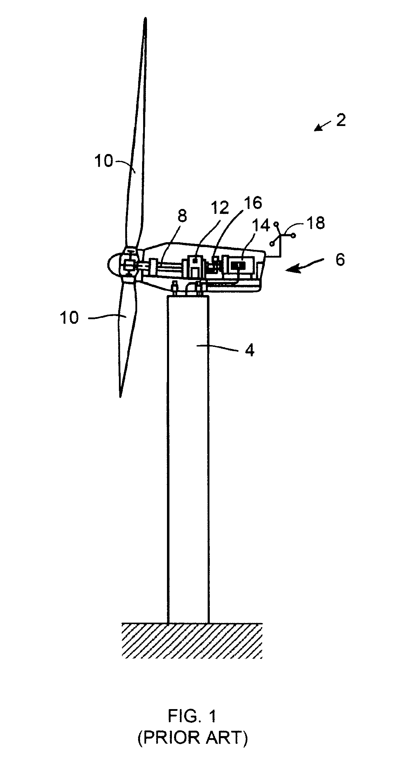

Wind turbines are typically categorized according to the vertical or horizontal axis about which the blades rotate. One so-called horizontal-axis wind generator is schematically illustrated in FIG. 1 and available from General Electric Company. This particular "up-wind" configuration for a wind turbine 2 includes a tower 4 supporting a nacelle 6 enclosing a drive train 8. The blades 10 are arranged on a "spinner" or hub 9 to form a "rotor" at one end of the drive train 8 outside of the nacelle 6. The rotating blades 10 drive a gearbox 12 connected to an electrical generator 14 at the other end of the drive train 8 arranged inside the nacelle 6 along with a control system 16 that may receive input from an anemometer 18.

The blades 10 generate lift and capture momentum from moving air that is them imparted to the rotor as the blades spin in the "rotor plane." Each blade 10 is typically secured to the hub 9 at its "root" end, and then "spans" radially "outboard" to a free, "tip" end. The front, or "leading edge," of the blade 10 connects the forward-most points of the blade that first contact the air. The rear, or "trailing edge," of the blade 10 is where airflow that has been separated by the leading edge rejoins after passing over the suction and pressure surfaces of the blade. A "chord line" connects the leading and trailing edges of the blade 10 in the direction of the typical airflow across the blade and roughly defines the plane of the blade. The length of the chord line is simply the "chord."

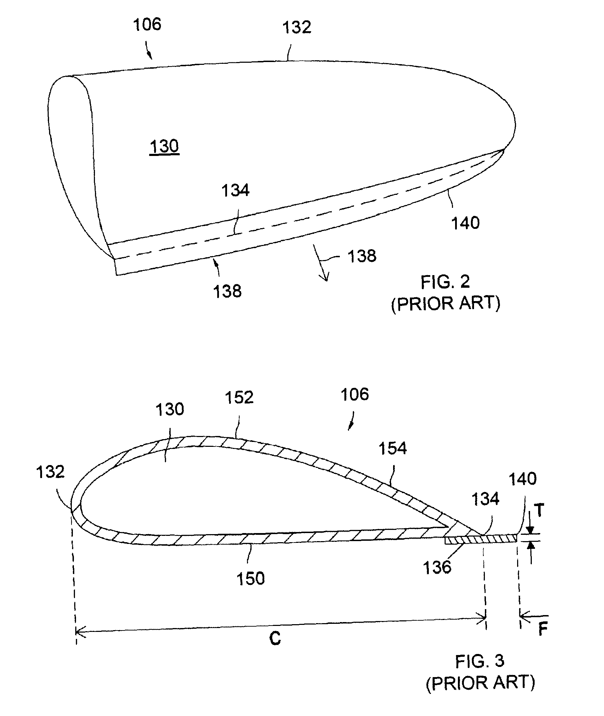

Commonly-owned U.S. Patent No. 7,458,777 is incorporated by reference here in its entirety and discloses a wind turbine rotor assembly and acoustic flap. FIG. 2 from that patent is a perspective view of the turbine blade 106 in that patent for use with the wind turbine 2 shown in FIG. 1, or any other suitable wind turbine. For example, the blade 106 may be used to modify or replace any of the blades 10 in FIG. 1.

As discussed in that patent, the blades 106 of the turbine 100 can in some conditions produce acoustic noise in use that is undesirable in certain installations, such as when the turbine 100 is located in close proximity to a populated area, and particularly to residential areas. Such problems can be compounded when multiple blades 106 are producing noise, and when more than one turbine 100 is located in the same general geographic area. To overcome such issues, one or more of the blades 106 includes an acoustic flap that reduces and mitigates acoustic noise to more acceptable levels in use. Advantageously, the noise can be reduced, using the acoustic flaps, at a lower cost than conventional, noise reduction techniques.

The blade 106 includes a body 130 defining a leading edge 132 and a trailing edge 134 (shown in phantom in FIG. 2). To address acoustic noise generation issues of the blade 106 in operation, a substantially rigid acoustic flap 136 is secured to the blade body 130 and extends outward and away from the trailing edge 134 in a direction of arrow 138. A distal end 140 of the acoustic flap 136 is spaced from the trailing edge 134 and in an exemplary embodiment the distal end 140 is substantially smooth and continuous. That is, the distal end 140 of the acoustic flap 136 does not include serrations or saw teeth forming sharp or discontinuous edges of the flap 136, but rather the distal end 140 of the acoustic flap 136 extends generally uniformly parallel to the trailing edge 134 of the blade body 130 in a smooth and uninterrupted manner. Stated another way, the contour of the distal end 140 of the acoustic flap 136 approximately matches the contour or geometry of the blade body trailing edge 134, but the distal end 140 of the flap 136 is spaced a predetermined distance from the trailing edge 134 of the blade body 130 so that the flap 136 extends beyond the trailing edge 134 while maintaining approximately the same shape and geometry of the trailing edge 134.

In one embodiment, the acoustic flap 136 is separately provided and fabricated from the blade body 130, and in one embodiment the flap 136 is fabricated from a thin sheet or plate of rigid material, such as metal, fiber reinforced plastics or rigid plastic materials, and the like having sufficient structural strength to avoid bending and deflection of the flap 136 when the blade 106 is subjected to applied forces, such as wind loading force and dynamic forces and vibration encountered by the blade 106 as the blade 106 is rotated. It is understood, however, that other materials may likewise be employed in lieu of metal and plastic materials, provided that such materials exhibit sufficient rigidity to withstand applied forces in use when the blade 106 is used in a wind turbine application. Thin sheet or plate materials suitable for the flaps 136 may be acquired from a variety of manufacturers at relatively low cost, and the flaps 136 may be cut, stamped, or otherwise separated from a larger sheet of material in a relatively simple manner with minimal cost and machining.

FIG. 3 is a cross sectional view of the turbine blade 106 from FIG. 2 including a high pressure side 150 and a low pressure side 152 extending between the leading edge 132 and the trailing edge 134 of the blade body 130. While the body 130 shown in FIG. 3 is hollow in cross section, it is recognized that hollow solid bodies may alternatively be used in another embodiment. The blade body defines a chord distance or dimension C between the leading edge 132 and the trailing edge 134, and the distal end 140 of the acoustic flap 136 extends outwardly and away from the trailing edge 134 for a distance F that is a specified fraction of the chord distance C. In an exemplary embodiment, F is about 3% or less of the chord distance C.

Also, in an exemplary embodiment, the acoustic flap 136 has a thickness T, measured between the major surfaces of the flap 136 that is much less than a thickness of the blade trailing edge 134. In one embodiment, the flap thickness T may be up to about 0.3% of the chord distance C to achieve noise reduction without negatively impacting the efficiency of the blades 106 to produce electricity. While exemplary dimensions are provided, it is understood that such dimensions are for illustrative purposes only, and that greater or lesser dimensions for T and F may be employed in other embodiments.

The acoustic flap 136 in one embodiment is secured to an outer surface 154 of the blade body 130 is and substantially flush with the outer surface 154 to avoid disturbance of airflow over the pressure side 150 when the flap 136 is attached to the blade 106. In a further embodiment, a small recess or groove (not shown) could be provided in the blade outer surface 154 to receive the flap 136 so that an outer surface of the flap 136 is substantially flush and continuous with the outer surface 154 of the blade body 130. The flap 136 is secured, fixed or bonded to the outer surface 154 with, for example, a known adhesive, tape or other affixation methods known in the art that securely maintain the flap 136 to the blade body outer surface 154. The flap 136 may be mounted to the blade body 130 mechanically, chemically, or with a combination of mechanical and chemical bonding methods. In an alternative embodiment, the flap 136 may be integrally or monolithically formed into the blade body 130 if desired.

The flap 136 is extended from, affixed to or secured to the blade body 130, for example, adjacent the trailing edge 134 on one side of the blade body 130, namely the pressure side 150 of the blade body 130 in one exemplary embodiment. Rivets, screws or other fasteners that would project upwardly from the outer surface 154 of the blade body 130 and disrupt airflow across or above the blade are preferably avoided. Also, the acoustic flap 136 is uniformly bonded to the outer surface 154 along substantially the entire length of the blade trailing edge 134, thereby avoiding air gaps between the flap 136 and the blade outer surface 154 that could cause the flap 136 to separate from the blade body 130, or air gaps that could cause airflow disturbances that could impair the efficiency of the wind turbine 2 (FIG. 1) or produce acoustic noise in operation.

It is believed that a thin acoustic flap 136 applied to the pressure side 150 of the trailing-edge 134 of the blade 106 can decrease noise emission or avoid a tonality in use, and that noise reduction may be realized using the acoustic flap 136. In particular, for blade bodies 130 having a relatively thick trailing edge 134, such as about 3 mm in an exemplary embodiment, the acoustic flap 136 has been found to remove negative effects of a thick trailing edge. In general, and absent the acoustic flap 136, as the thickness of the trailing edge 134 increases, so does the resultant acoustic noise of the blade in use. The acoustic flap 136, however, has been found to mitigate noise when thicker trailing edges are employed.

A generally low cost and straightforward solution to noise issues of turbine blades in use is provided by virtue of the acoustic flap 136, and the flap 136 may be rather easily applied and retrofitted to existing turbine blades as desired. Additionally, if the flaps 136 are damaged, they may be rather easily replaced. A versatile, noise reduction feature is therefore provided that may be used in varying types of blades as desired. The acoustic flaps 136 may be used in combination with other known noise reducing features if desired, including but not limited to surface treatments to the blade body, to further reduce trailing edge noise broadband and tonality of the turbine blades in use. Considered over a number of blades and a number of turbines, substantial noise reduction may be achieved.

These and other drawbacks associated with such conventional approaches are addressed here in by providing, in various embodiments, a wind turbine blade including a permeable flap extending from a trailing edge of the blade.

Various aspects of this technology will now be described with reference to the following figures ("FIGs.") which are not necessarily drawn to scale, but use the same reference numerals to designate corresponding parts throughout each of the several views, in which:
FIG. 1 is a schematic side view of a conventional wind generator.
FIG. 2 is a perspective view of a conventional wind turbine blade.
FIG. 3 is a cross-sectional view of the conventional turbine blade shown in FIG. 2.
FIG. 4 is a partial orthographic view of a flap for the wind turbine blade shown in FIGs. 2 and 3.
FIG. 5 is a partial orthographic view of another flap for the wind turbine blade shown in FIGs. 2 and 3.
FIG. 6 is a partial orthographic view of another flap for the wind turbine blade shown in FIGs. 2 and 3.

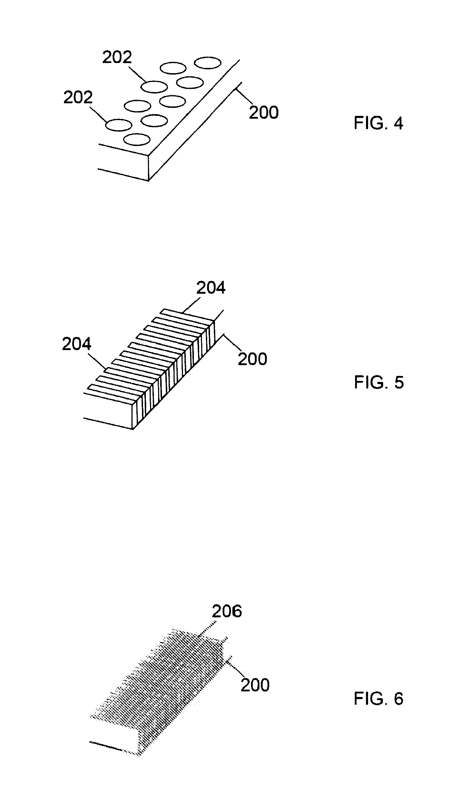

FIGs. 4-6 illustrate various configurations for a permeable flap 200 for use with the wind turbine blade 10 shown in FIG. 1. For example, the permeable flap 200 will extend from a trailing edge of the blade 10, and, in this regard, may be used to replace, modify, or supplement the rigid flap 136 shown in FIGs. 2 and 3. The permeable flap 200 may be configured similar to the flap 136 described above with regard to FIGs. 2 and 3 and/or in other configurations. For example, the permeable flap 200 may also be porous and/or flexible, and/or the permeable flap 200 may be integrated with the blade 10 or a portion of the blade 10. The permeable flap 200 may extend continuously or intermittently along some or all of the span of the blade 10. Furthermore, the flap 200 may be applied to either the pressure or suction side of the blade 10.

As illustrated in FIG. 4, the permeable flap 200 may include a perforated surface. The perforations 202 may include cylindrical holes and/or holes of other shapes, such as slits or slots. The perforations 202 may be microscopic in size, or otherwise too small to be seen by the unaided eye. Non-permeable sheet materials with regular perforations 202 through the material (such as slitted or perforated sheets) in order to provide permeability are expected to produce adequate noise reduction when surface porosities are less than about 20% of the surface area of the permeable flap 200. It is also expected that many smaller perforations 202 in the form of holes and/or slits through an otherwise non-permeable flap 200 will produce better results than fewer large holes spread over the same percentage of surface area of the flap. Increasing, or otherwise varying, the surface porosity and corresponding permeability of the flap 200 in direction of flow over the flap is also expected to provide better results. For example, in the case of an otherwise non-permeable flap, providing a higher density of perforations 202 near the trailing edge of the flap 200 is expected to offer improved results.

As illustrated in FIG. 5, wherein the permeable flap 200 may include one or more felt surfaces 204. Other permeable textiles may also be used including animal textiles such as wool or silk, plant textiles, mineral textiles and glass, basalt and/or asbestos fibers, and synthetic textiles such as GORE-TEX® membranes and fabrics, polyester, acrylics, nylon, spandex, Kevlar® and/or any combination of these and textiles. Although FIG. 5 illustrates equally-spaced felt strips that cover only a portion of the permeable flap 200, the felt 204 may also completely cover the permeable flap 200. For example, the felt 204 may be used to cover an otherwise open support structure. Felt may also be used to cover the openings of the perforations 202 and/or perforations 202 may also be provided in the felt material for additional permeability.

As illustrated in FIG. 6, the permeable flap 200 may also include a screen 206, such as a sintered or unsintered wire mesh screen. The screen 206 may also be formed from other fibers, including textile fibers. The screen may also act as an underlying structure for supporting a textile such as felt and/or as a protective layer over the felt 204. For example, highly flexible material such as felt, Kevlar®, and fabrics may be applied over a more rigid framework or underlying structure while more rigid materials such as perforated plate, stiff sintered screen, or slits may be used without additional support structure and/or as a base for the flexible material.

The flap 200 may be permeable over its entire length and width, or just a portion thereof, and the permeability may change over any dimension of the flap. The permeable flap 200 may also be arranged in any configuration. For example, the permeable flap 200 may extend (a distance "F" in FIG. 3) from a trailing edge of the blade 10 (FIG. 1) between approximately 1% and 5% of a chord of the blade, between approximately 2% and 4% of a chord of the blade, or about 3% of a chord of the blade. The permeable flap may also have a thickness ("T" in FIG. 3), less than about 0.5% of a chord of the blade, or less than about 0.3% of a chord of the blade. For example, the thickness "T" may be around 1-2 mm (or 0.1-0.2% of chord) along some or all of the span of the flap 200. In that case, since the chord changes along the span, the dimension "T" as a percentage of chord will be closer to 0.5% near the tip and closer 0.1 % or less near the inboard portion of the flap 200. Furthermore, for a substantially stiff material such as perforated sheet metal or fiberglass, the dimension "T" may be much smaller.

The technology described above offers various advantages over conventional approaches by reducing wind turbine blade trailing edge noise at low cost and with minimal performance impact. For example, the permeability of the flap 200 allows communication of the pressure field between the pressure and suction sides of the blade 10 in order to improve the noise reduction capabilities of the conventional flap 136. Similarly, flexibility in the permeable flap 200 allows the flap to adapt to flow conditions by changing shape. For a flexible permeable flap 200, the pressure difference between the upper and lower surfaces of the blade will cause the mean shape of the flap to adapt in a compliant manner in a way that reduces the trailing edge vortex strength and reduces noise. The shape of the resulting flap then would be controlled by the material flexibility and permeability of the flap material. Lower values of surface porosity (down to 0% percent open area) and corresponding permeability will generally allow less pressure relief between pressure and suction sides of the blade, but more bending in the flap. Higher values of surface porosity (up to about 50% percent open area) and corresponding permeability will generally allow more pressure relief, but less change in the shape of the acoustic flap due to pressure differential between the upper and lower surfaces. The permeability and/or flexibility of the flap 200 may be adjusted with different materials and/or perforation densities in order to affect the noise source characteristics and sound radiation efficiency of a particular blade 10 for various blade configurations and/or operating environments.

It should be emphasized that the embodiments described above, and particularly any "preferred" embodiments, are merely examples of various implementations that have been set forth here to provide a clear understanding of various aspects of this technology. One of ordinary skill will be able to alter many of these embodiments without substantially departing from scope of protection defined solely by the proper construction of the following claims.

Various aspects and embodiments of the present invention are defined by the following numbered clauses:
1. A wind turbine blade, comprising a permeable flap extending from a trailing edge of the blade.
2. The wind turbine blade recited in clause 1, wherein the permeable flap is substantially flexible.
3. The wind turbine blade recited in any preceding clause, wherein the permeable flap comprises a perforated surface.
4. The wind turbine blade recited in any preceding clause, wherein the perforations include slits.
5. The wind turbine blade recited in any preceding clause, wherein the perforations are microscopic in size.
6. The wind turbine blade recited in any preceding clause, wherein the slits are microscopic in size.
7. The wind turbine blade recited in any preceding clause, wherein the permeable flap comprises a felt surface.
8. The wind turbine blade recited in any preceding clause, wherein the permeable flap comprises a screen.
9. The wind turbine blade recited in any preceding clause, wherein the screen includes a sintered wire mesh screen.
10. The wind turbine blade recited in any preceding clause, wherein the permeable flap extends from a trailing edge of the blade between approximately 1% and 5% of a chord of the blade.
11. The wind turbine blade recited in any preceding clause, wherein the permeable flap extends from a trailing edge of the blade between approximately 2% and 4% of a chord of the blade.
12. The wind turbine blade recited in any preceding clause, wherein the permeable flap has a thickness of less than about 5% of a chord of the blade.
13. The wind turbine blade recited in any preceding clause, wherein the permeable flap has a thickness of less than about 0.3% of a chord of the blade.
14. A wind turbine blade, comprising:
   a substantially flexible, permeable flap extending from a trailing edge of the blade between approximately 1% and 5% of a chord of the blade; and
   wherein the permeable flap has a thickness of less than about 0.5% of the blade.
15. The wind turbine blade recited in any preceding clause, wherein the permeable flap extends from a trailing edge of the blade between approximately 2% and 4% of a chord of the blade.
17. The wind turbine blade recited in any preceding clause, wherein the permeable flap has a thickness of less than about 0.3% of a chord of the blade.
18. The wind turbine blade recited in any preceding clause, wherein the permeable flap has a thickness of less than about 0.3% of a chord of the blade.
19. The wind turbine blade recited in any preceding clause, wherein the permeable flap comprises a felt surface.
20. The wind turbine blade recited in any preceding clause, wherein the permeable flap comprises a screen.

## Claims

1. A wind turbine blade (106), comprising a permeable flap (200) extending from a trailing edge of the blade (106).

2. The wind turbine blade (106) recited in claim 1, wherein the permeable flap (200) is substantially flexible.

3. The wind turbine blade (106) recited in claims 1 or 2, wherein the permeable flap (200) comprises a perforated surface (202).

4. The wind turbine blade (106) recited in claim 3, wherein the perforations include slits.

5. The wind turbine blade (106) recited in claim 3 or 4, wherein the perforations (202) are microscopic in size.

6. The wind turbine blade (106) recited in any of the preceding claims, wherein the permeable flap (200) comprises a felt surface.

7. The wind turbine blade (106) recited in any of the preceding claims, wherein the permeable flap (200) comprises a screen (206).

8. The wind turbine blade (106) recited in claim 7, wherein the screen (206) includes a sintered wire mesh screen.

9. The wind turbine blade (106) recited in any of the preceding claims, wherein the permeable flap (200) extends from a trailing edge (134) of the blade (106) between approximately 1% and 5% of a chord of the blade (106).

10. The wind turbine blade (106) recited in claim 9, wherein the permeable flap (200) extends from a trailing edge (134) of the blade between approximately 2% and 4% of a chord of the blade (106).

11. The wind turbine blade (106) recited in any of the preceding claims, wherein the permeable flap (200) has a thickness (T) of less than about .5% of a chord (C) of the blade (106).

12. The wind turbine blade (106) recited in any of the preceding claims, wherein the permeable flap (200) has a thickness (T) of less than about 0.3% of a chord (C) of the blade (106).
